(19) Europäisches Patentamt
European Patent Office
Office européen des brevets

(11) **EP 3 988 485 B1**

(12) **EUROPÄISCHE PATENTSCHRIFT**

(45) Veröffentlichungstag und Bekanntmachung des Hinweises auf die Patenterteilung:
**31.01.2024 Patentblatt 2024/05**

(21) Anmeldenummer: **21202327.9**

(22) Anmeldetag: **13.10.2021**

(51) Internationale Patentklassifikation (IPC):
**B65H 23/182** (2006.01)     **B65H 23/188** (2006.01)
**B65H 23/195** (2006.01)

(52) Gemeinsame Patentklassifikation (CPC):
**B65H 23/1955; B65H 23/1825; B65H 23/1888;**
B65H 2513/11; B65H 2515/31; B65H 2515/37;
B65H 2557/24; B65H 2557/61; B65H 2557/63

(54) **PARAMETRIERUNG EINES ZUGKRAFTREGLERS**

PARAMETERIZATION OF A TRACTION CONTROLLER

PARAMÉTRAGE D'UN RÉGULATEUR DE FORCE DE TRACTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2020 AT 508852020**

(43) Veröffentlichungstag der Anmeldung:
**27.04.2022 Patentblatt 2022/17**

(73) Patentinhaber: **B&R Industrial Automation GmbH 5142 Eggelsberg (AT)**

(72) Erfinder:
• **Rappel, Lukas Stefan
5142 Eggelsberg (AT)**
• **Anschuber, Ulrich
5142 Eggelsberg (AT)**
• **Skotschek, Ralf
5142 Eggelsberg (AT)**
• **Staudecker, Martin
5142 Eggelsberg (AT)**

(74) Vertreter: **Patentanwälte Pinter & Weiss OG
Prinz-Eugen-Straße 70
1040 Wien (AT)**

(56) Entgegenhaltungen:
**EP-A2- 2 246 760     DE-A1- 19 754 878
DE-T5-112014 005 964**

**Beschreibung**

Die gegenständliche Erfindung betrifft ein Verfahren zur Parametrierung eines Zugkraftreglers einer geregelten Walze einer Bahnverarbeitungsmaschine, wobei der Zugkraftregler die Zugkraft über eine Drehzahl der geregelten Walze regelt, um auf der Bahnverarbeitungsmaschine ein Material mit einer Liniengeschwindigkeit und beaufschlagt mit der Zugkraft von der geregelten Walze zu einer weiteren Walze oder von einer weiteren Walze zur geregelten Walze zu transportieren, sowie eine Verwendung eines Zugkraftreglers parametriert gemäß des erfindungsgemäßen Verfahrens zur Regelung einer Drehzahl einer geregelten Walze in einer Bahnverarbeitungsmaschine, um Material mit einer Liniengeschwindigkeit und beaufschlagt mit der Zugkraft von der geregelten Walze zu einer weiteren Walze oder von einer weiteren Walze zur geregelten Walze zu transportieren. Weiters betrifft die gegenständliche Erfindung einen Zugkraftregler einer geregelten Walze einer Bahnverarbeitungsmaschine, auf welcher ein Material mit einer Liniengeschwindigkeit, beaufschlagt mit einer Zugkraft, von der geregelten Walze zu einer weiteren Walze oder von einer weiteren Walze zu einer geregelten Walze transportiert wird, wobei der Zugkraftregler eine Parametriereinheit zum Parametrieren des Zugkraftreglers aufweist und wobei der Zugkraftregler ausgestaltet ist, die Zugkraft über eine Drehzahl der geregelten Walze zu regeln.

In einer Bahnverarbeitungsmaschine wird ein Material in Form von Bahnen, Folien, Schläuchen, Drähten oder Bändern mit einer Liniengeschwindigkeit entlang einer Transportbahn transportiert und in einem Verarbeitungsprozess zu einem Produkt oder Zwischenprodukt verarbeitet. Als Material kann Metall, Kunststoff, Kohlefaser, Textil, Papier, Verbundstoff etc. vorgesehen sein. Das Material liegt dabei als Wickelgut auf einem Wickler (Rolle, Walze, Trommel etc.) aufgewickelt vor, wird vom Wickler abgewickelt und in Folge verarbeitet. Eine unkontrollierte Streckung oder Stauchung des Materials hat nachteilige Auswirkungen sowohl auf die Eigenschaften des Materials selbst, als auch auf die Prozessgüte der Verarbeitung innerhalb der Bahnbearbeitungsmaschine. Es kann vorgesehen sein, dass das Produkt oder Zwischenprodukt am Ende des Verarbeitungsprozesses wieder auf einen Aufwickler aufgewickelt wird oder einem weiteren (Verarbeitungs)Prozess zugeführt wird.

Während des Verarbeitungsprozesses wird das Material einer Zugkraft ausgesetzt. Diese Zugkraft ergibt sich durch einen schlupffreien Transport des Materials zwischen Walzen, beispielsweise dem Wickler und einer Zugrolle. Die Zugrolle ist mit einer Anpresswalze versehen, um das Material schlupffrei zwischen der Zugrolle und der Anpresswalze entlang der Transportbahn zu transportieren. Das Material wird also zwischen dem Wickler und der Zugrolle mit einer Liniengeschwindigkeit transportiert und währenddessen mit einer Zugkraft gespannt. Grundlegend sind beide Walzen, d.h. der Wickler und die Zugrolle, angetrieben.

Es wird also beiden Achsen eine Solldrehzahl vorgegeben, welche vorzugsweise zentral generiert wird. Es ist vorgesehen, dass nur eine der Walzen (vorzugsweise der Wickler) geregelt wird, indem additiv eine Korrekturdrehzahl auf die Solldrehzahl aufgeschaltet wird, da eine Regelung beider Walzen zu einer Instabilität der Zugkraft führen kann.

Die gleichmäßige Entnahme (d.h. ein gleichmäßiges Abwickeln) des Materials vom Wickler auch bei unterschiedlichen Rahmenbedingungen, wie zum Beispiel geometrischen Unregelmäßigkeiten, ist eine wesentliche Voraussetzung für die Qualität des erzeugten Produktes oder Zwischenprodukts. Beispielsweise kann ein unrund laufender Wickler die Zugkraft so stark beeinflussen, dass es für den Zugkraftregler kaum möglich ist diese Beeinflussung zu korrigieren. Eine schwankende Zugkraft kann auch durch unregelmäßig aufgewickeltes Material oder einen seitlichen Versatz beim Wickeln auftreten. Insbesondere wenn die Liniengeschwindigkeit des Materials auf eine Arbeitsgeschwindigkeit beschleunigt wird, leistet der Zugkraftregler einen Beitrag. Somit wird ein Zugkraftregler insbesondere dann verwendet, wenn eine exakte Zugspannung im Material in allen Phasen des Produktionsprozesses gewährleistet werden soll. Im Gegensatz zu einer Zugkraftsteuerung ist bei der Zugkraftregelung eine Messeinheit, die die Ist-Zugkraft im Material misst, welche an den Zugkraftregler rückgeführt wird, vorgesehen.

Es ist in einer Zugkraftregelung ein geregelter Slave (üblicherweise der Wickler) und ein Master vorgesehen, wobei ein geschlossener Regelkreis vorliegt. Der Slave weist, wie der Master, eine Drehzahl auf, wobei der Zugkraftregler auf die Drehzahl des Slaves eine Korrekturdrehzahl aufschaltet, womit die Zugkraft eingestellt wird. Die Korrekturdrehzahl wird vom Zugkraftregler aus der ermittelten Ist-Zugkraft und einer vorgegebenen Soll-Zugkraft ermittelt.

Vorzugsweise werden bei der Zugkraftregelung unterschiedliche Einflussgrößen, z.B. der Durchmesser des Materials und/oder die aktuelle Liniengeschwindigkeit, berücksichtigt, um eine optimale Verarbeitung des Materials zu gewährleisten. Wenn geeignete Mittel vorgesehen sind, kann beispielsweise der Durchmesser des Materials exakt vermessen werden. Wird der Durchmesser des Materials nicht vermessen, da dies nicht vorgesehen oder nicht möglich ist, so kann auf eine Schätzung des Durchmessers zurückgegriffen werden.

Die Ermittlung der Reglerparameter des Zugkraftreglers erfolgt üblicherweise erst bei der Inbetriebnahme der Bahnverarbeitungsmaschine unter Produktionsbedingungen. Der Vorgang ist sehr zeitaufwendig und der Anwender muss über ausgeprägtes Prozesswissen verfügen, um brauchbare Ergebnisse zu erhalten.

Die Reglerparameter können auch automatisch bestimmt werden. Die DE 11 2014 005 964 T5 zeigt ein derartiges Verfahren, wobei die Zugkraft langsam auf einen Zugkraft-Arbeitspunkt gesteigert und bei Erreichen des Zugkraft-Arbeitspunkts die Parametrierung des Zugkraftreglers gestartet wird.

Es ist eine Aufgabe der gegenständlichen Erfindung eine einfache und automatische Parametrierung eines Zugkraftreglers einer Bahnverarbeitungsmaschine zu gewährleisten.

Diese Aufgabe wird erfindungsgemäß gelöst, indem während eines Stillstandstests bei einer Liniengeschwindigkeit von null die Zugkraft auf eine Identifizierungszugkraft, vorzugsweise 90% eines vorgegebenen Stillstands-Zugkraft-Arbeitspunkts, erhöht wird, um die Stillstands-Streckenparameter der Zugkraftstrecke zu bestimmen und aus der Stillstands-Zugkraftstrecke, vorzugsweise mittels eines Frequenzkennlinienverfahrens, Stillstands-Reglerparameter des Zugkraftreglers zu ermitteln, wobei der Zugkraftregler mit den Stillstands-Reglerparametern parametriert wird. Weiters wird die Aufgabe durch eine Parametriereinheit gelöst, die der Zugkraftregler zum Parametrieren des Zugkraftreglers aufweist und die ausgestaltet ist, während eines Stillstandstests bei einer Liniengeschwindigkeit von null die Zugkraft auf eine Identifizierungszugkraft, vorzugsweise 90% eines vorgegebenen Stillstands-Zugkraft-Arbeitspunkts, zu erhöhen, um Stillstands-Streckenparameter der Zugkraftstrecke zu bestimmen und aus den Stillstands-Streckenparameter der Stillstands-Zugkraftstrecke, vorzugsweise mittels eines Frequenzkennlinienverfahrens, Stillstands-Reglerparameter des Zugkraftreglers zu ermitteln und den Zugkraftregler mit den Stillstands-Reglerparametern zu parametrieren. Die Identifizierungszugkraft wird derart gewählt, dass weder das Material, noch eine Komponente der Bahnverarbeitungsmaschine beschädigt wird und ist somit auch von der Wahl des Stillstands-Zugkraft-Arbeitspunkts abhängig. Es ist grundlegend auch eine Identifizierungszugkraft in der Höhe von über 100% des vorgegebenen Stillstands-Zugkraft-Arbeitspunkts möglich. Durch Verwendung einer erfindungsgemäßen Parametriereinheit kann eine automatisierte Bestimmung der Reglerparameter erfolgen. Das beschriebene Verfahren, samt Stillstandstest, Kriechtest, Geschwindigkeitstest etc. kann automatisiert durch die Parametriereinheit durchgeführt werden. Die (Stillstands-)Zugkraftstrecke wird vorzugsweise als Integrator modelliert. Die Integratorverstärkung ist maßgeblich von den Materialparametern abhängig. Ein Material mit hoher Steifigkeit besitzt eine hohe Verstärkung. Folglich führt eine Längenänderung eines Materials mit hoher Steifigkeit zu einer höheren Zugkraft im Material als dieselbe Längenänderung eines Materials mit vergleichsweise niedrigerer Steifigkeit.

Es wird somit nicht, wie beispielsweise in der Druckschrift DE 11 2014 005 964 T5 offenbart, eine Schwingung auf die Zugkraft aufgeschaltet, sondern der Zugkraftregler bei Stillstand (Liniengeschwindigkeit von null) und bei einer Zugkraft in Höhe einer Identifizierungszugkraft betrieben. Aus den Streckenparameter der Zugkraftstrecke kann direkt das Elastizitätsmodul des Materials ermittelt werden. Da die Reglerparameter, vorzugsweise PI-Reglerparameter eines PI-Zugkraftreglers, rasch und automatisch ermittelt werden, ist für einen Anwender kein Regelungstechnikwissen und nur ein geringes Prozesswissen erforderlich. Es können somit automatisch die Streckenparameter der Zugkraftstrecke und die Reglerparameter bestimmt werden. Die Reglerparameter sind optimal auf gegebene Anforderungen, wie eine Anstiegszeit oder ein Überschwingen, abgestimmt, was bei einer händischen Ermittlung der Reglerparameter nur mit viel Aufwand möglich wäre.

Die Stillstands-Reglerparameter des Zugkraftreglers können mittels eines Frequenzkennlinienverfahrens aus den Stillstands-Streckenparameter der Stillstands-Zugkraftstrecke ermittelt werden. Das Frequenzkennlinienverfahren wird im Frequenzbereich angewendet. Es werden Anforderungen an das Einschwingverhalten der Antworten des geschlossenen Regelkreises auf gewisse ausgewählte Testfunktionen betrachtet und in Anforderungen an das Bode-Diagramm des offenen Regelkreises übertragen. Das Einschwingverhalten des geschlossenen Regelkreises wird anhand der Kenngrößen Anstiegszeit (Maß für die Schnelligkeit), Überschwingweite (Maß für den Dämpfungsgrad) und bleibende Regelabweichung (Maß für die stationäre Genauigkeit) beurteilt. Diese Kenngrößen des zeitlichen Verhaltens der Sprungantwort des geschlossenen Regelkreises werden mit dem Frequenzgang des offenen Kreises in Zusammenhang gebracht. Die Anstiegszeit hängt über Näherungsbeziehungen mit der Durchtrittsfrequenz zusammen. Die Durchtrittsfrequenz trennt jene Frequenzen, welche vom offenen Regelkreis verstärkt werden, von jenen, die vom offenen Regelkreis abgeschwächt werden, womit die Durchtrittsfrequenz ein Maß für die Bandbreite des offenen Regelkreises ist, wobei bei steigender Durchtrittsfrequenz die Dynamik des geschlossenen Regelkreises schneller wird. Das prozentuelle Überschwingen kann über eine Näherungsbeziehung mit der Phasenreserve in Verbindung gebracht werden. Die Phasenreserve ist ein Maß für den Abstand zur Stabilitätsgrenze, womit eine Verminderung der Phasenreserve eine Zunahme der Schwingneigung, d.h. des Überschwingens mit sich bringt. Die bleibende Regelabweichung hingegen steht direkt mit dem Verstärkungsfaktor der Übertragungsfunktion des offenen Kreises in Verbindung. Das Frequenzkennlinienverfahren ist grundsätzlich bekannt, weshalb es an dieser Stelle nicht näher beschrieben wird. Es sei beispielhaft auf Kapitel 5 des von Univ.-Prof. Dr. techn. Andreas Kugi verfassten Skriptums zur Vorlesung und Übung Automatisierung an der TU Wien für das Wintersemester 2019/2020 verwiesen.

Vorzugsweise wird die Zugkraft, vor der Erhöhung auf die Identifizierungszugkraft, auf eine Spannungszugkraft, vorzugsweise 10% des Stillstands-Zugkraft-Arbeitspunkts, erhöht. Damit kann sichergestellt werden, dass bei Beginn des Stillstandstests das Material unter einer mechanischen Spannung steht.

Es kann der Zugkraftregler mit den Stillstands-Reglerparametern parametriert und die Zugkraft auf die Stillstands-Arbeits-Zugkraft gesteigert werden. Nach Erreichen des Zugkraft-Arbeitspunkts wird ein Zugkraftsprung auf die Zugkraft aufgeschaltet, um anhand einer ersten Stillstands-Güte-Sprungantwort die Güte der Stillstands-Reglerparameter zu bestimmen, was vorzugsweise mittels des Rekursiven-Best-Fit-Verfahrens, d.h. unter Verwendung der Residuenquadratsumme, erfolgt. Die Stillstands-Reglerparameter werden auf Basis der Stillstands-Streckenparameter berechnet. Weiters wird eine Sprungantwort des geschlossenen Regelkreises gemessen, mit einer erwarteten Sprungantwort der identifizierten geschlossenen Regelstrecke verglichen und die Residuenquadratsumme berechnet.

Die Residuenquadratsumme ist ein Gütekriterium für die Genauigkeit des identifizierten Modells. Entspricht das Resultat den Erwartungen, ist der Stillstandtest abgeschlossen. Ansonsten kann der Test mit neuen Anforderungen an die Parametrierung des Zugkraftreglers wiederholt werden.

Vorzugsweise wird nach dem Stillstandstest ein Kriechtests durchgeführt, wobei der Zugkraftregler mit den Stillstands-Reglerparametern parametriert wird, und wobei eine erste Arbeits-Liniengeschwindigkeit und eine Zugkraft in der Höhe eines ersten Zugkraft-Arbeitspunkts vorgesehen ist. Es werden ein Zugkraftsprung auf die Zugkraft aufgeschaltet, eine Kriechsprungantwort ermittelt und aus der Kriechsprungantwort, vorzugsweise mittels eines (Rekursiven-)Least-Squares-Verfahrens, Fein-Streckenparameter der Zugkraftstrecke identifiziert. Aus der Kriechsprungantwort und den Fein-Streckenparametern werden, vorzugsweise mittels des Frequenkennlinienverfahrens, Fein-Reglerparameter ermittelt, und der Zugkraftregler mit den Fein-Reglerparametern parametriert. Der Kriechtest dient also dazu, die im Stillstandstest ermittelten Reglerparameter zu optimieren. Das Ergebnis dieser Optimierung sind die Fein-Reglerparameter.

Durch den Zugkraftsprung ergibt sich auch eine Änderung der Umfangsgeschwindigkeit der Achse. Als Kriechsprungantwort wird somit die Reaktion auf den Zugkraftsprung und die damit einhergehenden Änderung der Umfangsgeschwindigkeit des Wicklers bezeichnet.

Das (Rekursive)Least-Square-Verfahren (d.h. das Verfahren der kleinsten Fehlerquadrate in der rekursiven Variante (RLS)) verwendet ein parametrisches Modell, vorzugsweise das ARX (autoregressive with exogenous input) Modell, in Form einer klassifizierten Modellstruktur. Der Algorithmus basiert auf der Methode der kleinsten Quadrate und wird zur Schätzung von Modellparametern bei der Identifikation von linearen Systemen genutzt. Das Optimierungsproblem ist dabei so zu wählen, dass das Quadrat der Differenz aus Mess- und Modelldaten minimiert wird. Es wird also jene Lösung gesucht, die den quadratischen Fehler minimiert. Durch das Null setzen der Ableitung des Optimierungsproblems können die gesuchten Parametervektoren (optimale Lösung) berechnet werden. Die rekursive Variante erlaubt minimalen Rechenaufwand bei Hinzukommen neuer Daten, da das vorherige Ergebnis als Ausgangspunkt genutzt wird und mit jeder neuen Messung der Schätzwert des Parametervektors verbessert wird. Der RLS-Algorithmus benötigt für ein gutes Ergebnis maximal so viele Rekursionsschritte wie Parameter identifiziert werden sollen. Die Startwerte müssen sinnvoll gewählt werden. Die Rekursivität erst ermöglicht die Online-Anwendung zur Systemidentifikation. Das (Rekursive)Least-Square-Verfahren ist grundsätzlich bekannt, weshalb es an dieser Stelle nicht näher beschrieben wird. Es sei beispielhaft auf Kapitel 1.3.4 des von Assoc.-Prof. Dr.-Ing. Wolfgang Kemmetmüller und Univ.-Prof. Dr. techn. Andreas Kugi verfassten Skriptums zur Vorlesung "Regelungssysteme" für das Wintersemester 2018/2019 an der TU Wien verwiesen.

Es kann grundlegend auch ein Kriechtest durchgeführt werden, ohne dass zuvor ein Stillstandstest durchgeführt wurde, wenn vorab Grob-Reglerparameter ermittelt wurden und der Zugkraftregeler mit diesen Grob-Reglerparametern parametriert wird. Bei einer ersten Arbeits-Liniengeschwindigkeit und einer Zugkraft in der Höhe eines ersten Zugkraft-Arbeitspunkts kann ein Zugkraftsprung auf die Zugkraft aufgeschaltet und eine Kriechsprungantwort ermittelt werden, woraufhin aus der Kriechsprungantwort Fein-Streckenparameter der Zugkraftstrecke identifiziert und aus der Kriechsprungantwort und den Fein-Streckenparametern Fein-Reglerparameter ermittelt werden.

Die Grob-Regelparameter können, z.B. durch eine manuelle Analyse der Sprungantwort des geschlossenen Regelkreises, manuell bestimmt werden. So kann ein Zugkraftregler, z.B. in Form eines PI-Reglers, eines PID-Reglers, eines Zustandsreglers etc., bei einer Liniengeschwindigkeit von null ausgelegt werden. Es wird erst ein passender Wert für die Proportionalverstärkung gefunden, indem für alle Tests zunächst die Integrationszeit auf null gesetzt wird. Vorzugsweise werden sehr konservative Startwerte für die Verstärkung gewählt, bis der richtige Wertebereich gefunden wurde. Die Verstärkung wird solange erhöht, bis eine leichte Schwingung sichtbar wird und die Sprungantwort den Erwartungen entspricht. Bei einer Liniengeschwindigkeit von null lassen sich schon mit einem reinen P-Regler brauchbare Ergebnisse erzielen, da das System bei einer Liniengeschwindigkeit von null ein integrierendes Verhalten besitzt. Für den laufenden Betrieb, d.h. eine Liniengeschwindigkeit größer null, ist jedoch ein Integralanteil des Zugkraftreglers zwingend erforderlich, um keine bleibende Regelabweichung zu erhalten. Daher muss der Integralanteil des Zugkraftreglers variiert werden, sobald eine passende Proportionalverstärkung gefunden wurde. Die Integrationszeit des Reglers wird so gewählt, dass die vorgesehenen Anforderungen an Anstiegszeit und Überschwingen erfüllt werden. Eine kleinere Integrationszeit führt zu einem schnelleren Erreichen des Sollwerts, es tritt dabei jedoch eher ein Überschwingen auf. Eine größere Integrationszeit bewirkt das Gegenteil. Die Einstellung des Integrationsteils erfolgt nach Ermessen des Anwenders.

Aus den Fein-Streckenparametern kann das Elastizitätsmodul und/oder die Länge des Materials für die erste Arbeits-Liniengeschwindigkeit ermittelt werden. Es wird als Fein-Streckenparameter vorzugsweise das Produkt aus dem Elastizitätsmodul und der Querschnittsfläche des Materials ermittelt, wobei bei bekannter Querschnittsfläche direkt das Elastizitätsmodul berechnet werden kann.

Es kann ein Zugkraftsprung auf die Zugkraft aufgeschaltet werden, um anhand einer Kriech-Güte-Sprungantwort die Güte der Fein-Reglerparameter für die erste Arbeits-Liniengeschwindigkeit zu bestimmen, vorzugsweise mittels des Best-Fit-Verfahrens. Durch eine hohe Güte der Reglerparameter wird die mechanische Stabilität des Materials und damit die Qualität des Produktionsergebnisses, insbesondere bei Beschleunigungsphasen, Abbremsphasen, hoher Liniengeschwindigkeit etc., gewährleistet. Somit wird eine Produktion von Ausschuss und Makulatur reduziert.

Vorzugsweise wird nach dem Kriechtest ein Geschwindigkeitstest durchgeführt, wobei der Zugkraftregler mit den Fein-Reglerparametern parametriert wird, eine zweite Arbeits-Liniengeschwindigkeit und eine Zugkraft in der Höhe eines zweiten Zugkraft-Arbeitspunkts vorgesehen ist. Es werden ein Zugkraftsprung auf die Zugkraft aufgeschaltet, eine Geschwindigkeitstestsprungantwort ermittelt und daraus weitere Fein-Streckenparameter der Zugkraftstrecke identifiziert. Aus der Geschwindigkeitstestsprungantwort und den weiteren Streckenparametern können weitere Fein-Reglerparameter ermittelt werden, womit der Zugkraftregler mit den Fein-Reglerparametern parametriert werden kann. Als Geschwindigkeitstestsprungantwort wird die Reaktion auf den Zugkraftsprung und den damit einhergehenden Sprung der Umfangsgeschwindigkeit des Wicklers 2 bezeichnet.

Der Geschwindigkeitstest dient also dazu, die im Kriechtest für die erste Arbeitsgeschwindigkeit ermittelten Fein-Reglerparameter für die zweite Arbeitsgeschwindigkeit zu optimieren. Das Ergebnis dieser Optimierung sind die weiteren Fein-Reglerparameter. Damit liegen neben den Regelparametern für die erste Arbeits-Liniengeschwindigkeit auch Regelparameter für eine zweite Arbeits-Liniengeschwindigkeit vor. Vorzugsweise ist die zweite Arbeits-Liniengeschwindigkeit maximal gewählt, um Regelparameter für eine maximale Arbeits-Liniengeschwindigkeit zu erhalten.

Weiters können aus den Fein-Reglerparametern und den weiteren Fein-Reglerparametern zusätzliche Fein-Reglerparameter für zusätzliche Arbeits-Liniengeschwindigkeiten ermittelt werden, beispielsweise durch Interpolation. Diese Ermittlung zusätzlicher Reglerparameter für zusätzliche Arbeits-Liniengeschwindigkeiten ist besonders effizient, wenn die erste Arbeits-Liniengeschwindigkeit gering und die zweite Arbeits-Liniengeschwindigkeit maximal gewählt wurde.

Es können auch lediglich aus den Fein-Streckenparametern und den Fein-Reglerparametern zusätzliche Fein-Reglerparameter für zusätzliche Arbeits-Liniengeschwindigkeiten bestimmt werden, was beispielsweise mittels eines Koeffizientenvergleichs erfolgen kann.

Es können die Stillstands-Reglerparameter abgespeichert werden, wobei aus den Stillstands-Reglerparametern Extrapolations-Geschwindigkeits-Reglerparameter für eine Anzahl Extrapolations-Liniengeschwindigkeiten extrapoliert werden, und im Betrieb der Bahnverarbeitungsmaschine bei einer Liniengeschwindigkeit im Bereich einer der Extrapolations-Liniengeschwindigkeiten die zugehörigen Extrapolations-Geschwindigkeits-Reglerparameter zur Parametrierung des Zugkraftreglers abgerufen werden. Dafür können die im Stillstand identifizierten Stillstands-Streckenparameter, sowie die gewünschte Liniengeschwindigkeit in die allgemeine Übertragungsfunktion der Zugkraftstrecke G(s) eingesetzt und der Reglerentwurf für dieses System durchgeführt werden.

Vorzugsweise werden die zusätzlichen Fein-Reglerparameter für die zusätzlichen Arbeits-Liniengeschwindigkeiten abgespeichert und im Betrieb der Bahnverarbeitungsmaschine bei einer Liniengeschwindigkeit im Bereich der jeweiligen zusätzlichen Arbeits-Liniengeschwindigkeit mit den zugehörigen Fein-Reglerparametern die zugehörigen zusätzlichen Fein-Reglerparameter zur Parametrierung des Zugkraftregler abgerufen und der Zugkraftregler mit den zugehörigen zusätzlichen Fein-Reglerparametern parametriert.

Ebenso können die Fein-Reglerparameter für die erste Arbeits-Liniengeschwindigkeit abgespeichert werden, und im Betrieb der Bahnverarbeitungsmaschine bei einer Liniengeschwindigkeit im Bereich der ersten Arbeits-Liniengeschwindigkeit die Fein-Reglerparameter zur Parametrierung des Zugkraftreglers abgerufen werden und der Zugkraftregler mit den Fein-Reglerparametern parametriert werden.

Gleichermaßen können die weiteren Fein-Reglerparameter für die zweite Arbeits-Liniengeschwindigkeit abgespeichert und im Betrieb der Bahnverarbeitungsmaschine bei einer Liniengeschwindigkeit im Bereich der zweiten Arbeits-Liniengeschwindigkeit zur Parametrierung des Zugkraftreglers abgerufen werden und der Zugkraftregler mit den weiteren Fein-Reglerparametern parametriert werden.

Damit kann ein Parametersatz an verschiedenen zusätzlichen Fein-Reglerparametern für verschiedene zusätzliche Arbeits-Liniengeschwindigkeiten angelegt werden, auf welche im Betrieb der Bahnverarbeitungsmaschine je nach Bedarf zugegriffen werden kann, um den Zugkraftregler zu parametrieren.

Der Zugkraftregler, parametriert gemäß des erfindungsgemäßen Verfahrens, kann zur Regelung der Zugkraft eines Materials in einer Bahnverarbeitungsmaschine verwendet werden, wobei das Material mit einer Liniengeschwindigkeit und beaufschlagt mit der Zugkraft von einer geregelten Walze zu einer weiteren Walze oder von einer weiteren Walze zu einer geregelten Walze transportiert wird.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt

Fig.1    eine allgemeine Bahnverarbeitungsmaschine,

Fig.2    Zonen einer Bahnverarbeitungsmaschine,

Fig.3    eine Einstellung einer Zugkraft im Stillstand,

Fig.4    einen Stillstandstest,

Fig.5    einen Kriechtest oder Geschwindigkeitstest.

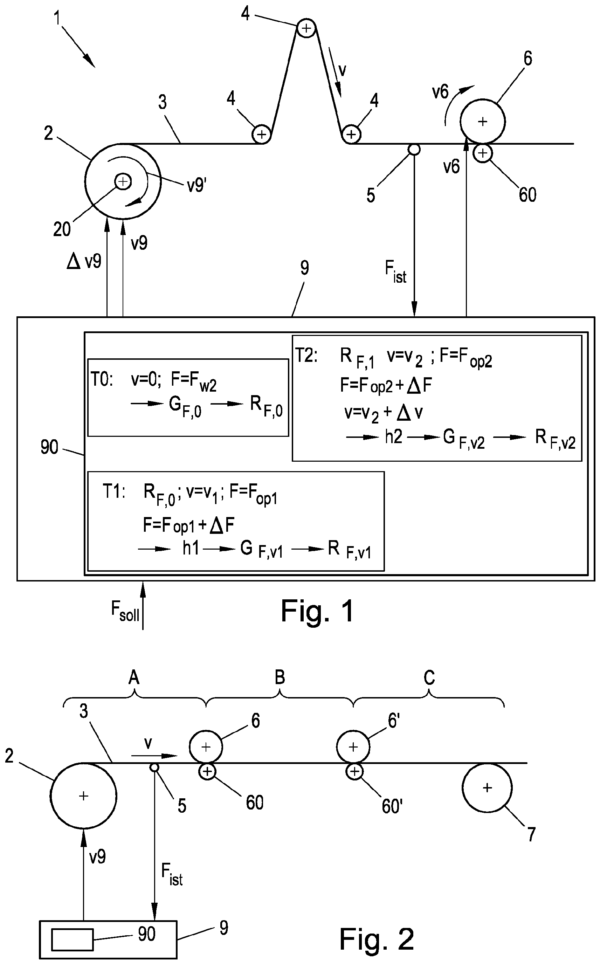

In Fig. 1 ist eine Bahnverarbeitungsmaschine 1 für kontinuierliche Prozesse dargestellt. Es ist als geregelte Walze ein Wickler 2 vorgesehen, welcher ausgestaltet ist, ein Material 3 auf einen Wicklerkern 20 aufzuwickeln oder vom Wicklerkern 20 abzuwickeln, je nachdem ob sich der Wickler am Anfang oder Ende der Bahnverarbeitungsmaschine 1 befindet. Es wird in Folge immer davon ausgegangen, dass das Material 3 vom Wicklerkern 20 abgewickelt wird, es ist jedoch auch immer analog ein Aufwickeln des Materials 3 auf den Wicklerkern 20 möglich. Das aufgewickelte Material 3 ist auf dem Wickler 2 vorgespannt und besitzt somit eine Grunddehnung $\varepsilon_0$.

Weiters ist eine Zugrolle 6 vorgesehen, welche eine Anpresswalze 60 aufweist, um das Material schlupffrei zwischen der Zugrolle 6 und der Anpresswalze 60 zu transportieren. Die Anpresswalze 60 ist nicht aktiv angetrieben und wird gegen die Zugrolle 60 gepresst. Durch die Kopplung über das Material 3 wirkt sich eine Drehzahländerung des Wicklers 2 auch auf die Zugrolle 6 aus. Die Zugrolle 6 selbst wird mit einer Zugrollendrehzahl v6 angetrieben, besitzt keinen überlagerten Zugkraftregler und stellt somit den Master dar. Durch die Zugrollendrehzahl v6 wird eine Liniengeschwindigkeit v des Materials 3 eingestellt. Die Liniengeschwindigkeit v wird somit durch die Umfangsgeschwindigkeit der Zugrolle 6 gesteuert, wobei Liniengeschwindigkeiten v von mehr als 1000 m/min möglich sind. Die Liniengeschwindigkeit v besitzt vorzugsweise ein trapezförmiges Profil, d.h. eine lineare Steigerung von null bis zur Arbeits-Liniengeschwindigkeit $v_1$, $v_2$ am Beginn des Produktionsprozesses. Die Liniengeschwindigkeit v wird während des Produktionsprozesses konstant auf der gewünschten Arbeits-Liniengeschwindigkeit $v_1$, $v_2$ gehalten und am Ende des Produktionsprozesses wieder linear auf null abgesenkt.

Der Wickler 2 weist eine Wicklerdrehzahl v9' auf, welche sich einerseits aus einer Wicklersolldrehzahl v9 und einer Korrekturdrehzahl $\Delta$v9 zusammensetzt. Die Umfangsgeschwindigkeit des Wicklers 2 wird konstant gehalten, womit die Wicklersolldrehzahl v9 abhängig vom Durchmesser des Wicklers 2 variiert. Die Korrekturdrehzahl $\Delta$v9 wird von einem Zugkraftregler 9 vorgegeben, um die Wicklerdrehzahl v9' zu regeln. Somit ist der Wickler 2 das Stellglied für die Regelung der Zugkraft F im Material 3. Die Ist-Zugkraft $F_{ist}$ wird als Prozessvariable unter Verwendung einer Messeinheit 5, z.B. einer Wägezelle, gemessen und zum Zugkraftregler 9 rückgeführt. Der Zugkraftregler 9 ermittelt aus der Ist-Zugkraft $F_{ist}$ und der Soll-Zugkraft $F_{soll}$ die Korrekturdrehzahl $\Delta$v9. Sowohl die Zugrollendrehzahl v6, als auch die Wicklersolldrehzahl v9 werden nur beispielhafterweise vom Zugkraftregler 9 vorgegeben und kann auch durch eine weitere Komponente vorgegeben werden.

Da der Wickler 2 und auch die Zugrolle 6 jeweils in einem Kontaktbereich mit dem Material 3 kraftschlüssig und schlupffrei verbunden sind, kann die Liniengeschwindigkeit v näherungsweise mit der Umfangsgeschwindigkeit der Zugrolle 6 und des Wicklers 2 gleichgesetzt werden. Abhängig von der auftretenden Zugkraft F weicht die Umfangsgeschwindigkeit des Wicklers 2 jedoch minimal von der Liniengeschwindigkeit v ab. Da das Material 3 vom Wickler 2 abgewickelt wird, ist es vorteilhaft, wenn bei einer Ermittlung des Zusammenhangs von Umfangsgeschwindigkeit des Wicklers 2 und Liniengeschwindigkeit v eine Änderung des Wicklerdurchmessers berücksichtigt wird. Dazu kann der Wicklerdurchmesser gemessen oder auch geschätzt werden.

Weist eine Bahnverarbeitungsmaschine 1 hingegen eine Tänzerregelung auf, so ist anstelle der Ist-Zugkraft $F_{ist}$ eine Tänzerposition als zurückzuführende Prozessvariable vorgesehen. Weist eine Bahnverarbeitungsmaschinen 1 eine Zugkraftsteuerung anstatt einem Zugkraftregler 9 auf, so ist gar keine Rückführung von Prozessvariablen vorgesehen.

Es sind in Fig. 1 ebenso optionale Umlenkrollen 4 vorgesehen, welche zur Führung des Materials 3 dienen, aber selbst nicht angetrieben sind. Das Massenträgheitsmoment der Umlenkrollen 4 ist gering und kann oftmals vernachlässigt werden. Es kann jedoch bei Beschleunigungs- und Bremsvorgängen durchaus erforderlich sein, das Massenträgheitsmoment der Umlenkrollen 4 zu berücksichtigen und ein glattes Liniengeschwindigkeitsprofil zu generieren, um negative Trägheitseffekte zu minimieren.

Eine Bahnverarbeitungsmaschine 1 besteht üblicherweise aus einer Mehrzahl an Sektionen, auch Zonen genannt. Der Begriff Zone bezeichnet in einer Bahnverarbeitungsmaschine 1 einen Bereich zwischen zwei angetrieben Walzen, zwischen denen das Material 3 schlupffrei eingespannt ist. Der Zustand des Materials 3 innerhalb einer Zone wird durch die beiden angetriebenen Walzen, welche die jeweilige Zone begrenzen, beeinflusst. In einer Zone dient eine Walze als Master und eine Walze als Slave. Oftmals sind in einer Bahnverarbeitungsmaschine 1 zumindest drei Zonen vorgesehen: Eine Eingangszone A, eine Prozesszone B und eine Ausgangszone C, wie es in Fig. 2 angedeutet ist. In der Eingangszone A wird das Material 3 vom Wickler 2 abgewickelt, indem die entsprechende Zugkraft $F_{ist}$ durch den Zugkraftregler 9 geregelt wird, indem dieser dem Wickler 2 eine Wicklerdrehzahl $v_9$' vorgibt. Vorzugsweise ist in der Eingangszone A eine Bahnlaufregelung vorgesehen, die einen seitlichen Versatz des Materials 3 korrigiert. Weiter kann auch ein Materialspuffer vorhanden sein, um Material zu speichern. Es handelt sich dabei um Konstruktionen mit Umlenkrollen, die den Abstand zueinander vergrößern und somit mehr Material 3 aufnehmen können. Das ist vor allem im Auf- und Abwickelbereich sinnvoll, wenn ein Rollenwechsel durchgeführt werden soll, ohne die Maschine zu stoppen. Während des Rollenwechsels wird das Material aus dem Puffer entnommen; die Bahnverarbeitungsmaschine muss währenddessen nicht gestoppt werden. In der Prozesszone B findet ein Bearbeitungsprozess (z. B. Drucken, Verpacken, Beschichten, Stanzen ...) statt, weshalb in der Prozesszone B die höchste Anforderung an die Genauigkeit der Zugkraft F gestellt wird. In der Ausgangszone C wird das Material 3 entnommen und/oder auf einen Aufwickler 7 aufgewickelt, wie es in Fig. 2 dargestellt wird. Wie in der Eingangszone A kann in der Ausgangszone C eine Bahnlaufregelung und/oder ein Materialspuffer vorgesehen sein. Das Material 3 kann nach einer Entnahme in einen weiteren, beispielsweise nicht kontinuierlichen, Prozess übergeführt werden.

Da alle Walzen, mit denen das Material 3 in kraftschlüssigem Kontakt steht (d.h. in Fig. 2 der Wickler 2, die Zugrolle 6, die weitere Zugrolle 6' und der Aufwickler 7), durch das Material 3 gekoppelt werden, können die Materialeigenschaften des Materials 3 einen wesentlichen Einfluss auf diese Kopplung und somit auf die Auslegung des Zugkraftreglers 9 haben.

Die Liniengeschwindigkeit v wird somit in einer Zone (Eingangszone A, Prozesszone B, Ausgangszone C) durch einen Master bestimmt, z.B. durch die Zugrolle 6 in der Eingangszone A. In Folge wird die Eingangszone A betrachtet. Es ist die Ermittlung der Reglerparameter jedoch grundlegend auch für Zugkraftregler 9 in Prozesszonen B oder Ausgangszonen C in analoger Weise möglich - sofern ein Master und ein Slave vorgesehen sind.

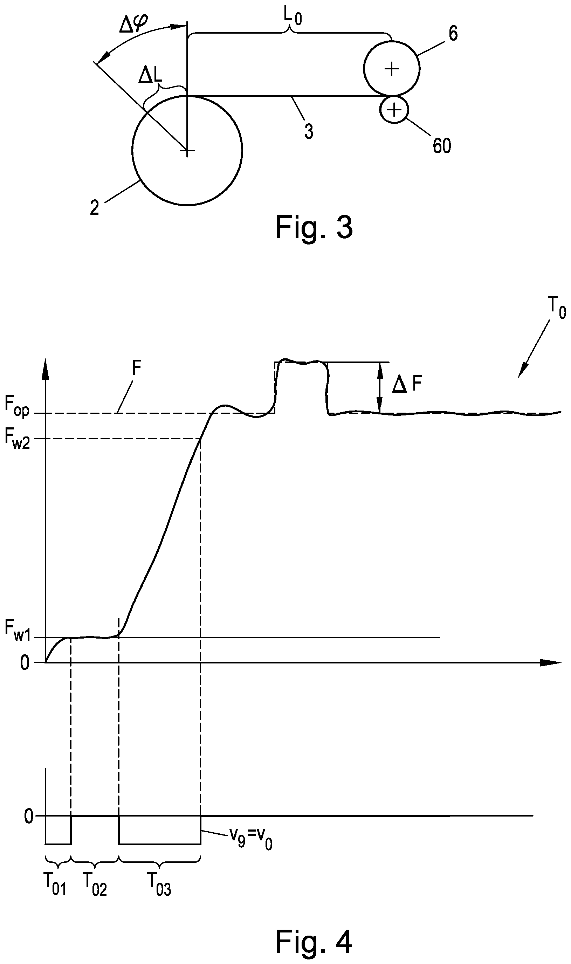

Im Stillstand, d.h. bei einer Liniengeschwindigkeit v von null, kann die Dehnung des Materials 3 über die Stellung des Wicklers 2 bestimmt werden. Das zwischen dem Wickler 2 und der Zugrolle 6 befindliche Material 3 weist eine Grundlänge $L_0$ auf. Somit entspricht die Zugkraft F in der Eingangszone A der Grundzugkraft Fo, mit der das Material 3 auf den Wickler 2 gewickelt wurde. Wird nun, wie in Fig. 3 dargestellt, die Stellung des Wicklers 2 um einen Einstellwinkel $\Delta\varphi$ geändert, so ergibt sich eine Längenänderung des Materials 3 um die Längendifferenz $\Delta L$, welche eine Zugkraftdifferenz $\Delta F$ bewirkt. Für die Zugkraft F ergibt sich somit die Summe aus Grundzugkraft F0 und Zugkraftdifferenz $\Delta F$: F = F0 + $\Delta F$.

Um im Betrieb, d.h. bei einer Liniengeschwindigkeit v von größer null, die Zugspannung F zu ändern, wird, wie erwähnt, auf die Wicklersolldrehzahl v9 eine entsprechende Korrekturdrehzahl $\Delta v9$ aufgeschaltet, woraus die Wicklerdrehzahl v9' des Wicklers 2 resultiert. Bei einer konstanten Korrekturdrehzahl $\Delta v9$ stellt sich nach einer gewissen Dauer eine konstante Änderung der Zugspannung $\Delta F$ ein, deren Höhe stark von der auftretenden Liniengeschwindigkeit v abhängig ist. Die Zugrolle 6 gibt somit als Master eine Liniengeschwindigkeit v vor und es wird die Wicklerdrehzahl v9' und damit Winkelgeschwindigkeit w des Wicklers 2 über die Korrekturdrehzahl $\Delta v9$ derart verändert, dass die gewünschte Zugkraft $F_{ist}$ im Material 3 erzeugt wird. Der Wickler 2 arbeitet also gewissermaßen gegen die Zugrolle 6 und erzeugt somit die Zugkraft F im Material 3.

Die Winkelgeschwindigkeit w des Wicklers 2 ändert sich auch bei konstanter Liniengeschwindigkeit v in Abhängigkeit des veränderten Radius r des Wicklers 2 mit w=v/r. Um dafür Sorge zu tragen, dass die Umfangsgeschwindigkeit des Wicklers 2 der Liniengeschwindigkeit v des Systems entspricht, muss somit die Winkelgeschwindigkeit w oder die Korrekturdrehzahl $\Delta v9$ immer an den aktuellen Radius r angepasst werden.

Der Zugkraftregler 9 kann beispielsweise einem PI-Regler entsprechen, wobei auch andere Arten von Reglern, z.B. PID-Regler, Zustandsregler etc. möglich sind.

Es können Reglerparameter $R_{F,v1}$, $R_{F,v2}$, $R_{F,vx}$ des Zugkraftregler 9 für diverse Arbeits-Liniengeschwindigkeiten $v_1$, $v_2$, $v_x$ bestimmt werden.

Das Material 3 kann in unterschiedlichen Formen vorliegen (Bahn, Draht etc.) und kann beispielsweise aus Papier, Gewebe, Kunststoff, Metall etc. bestehen. Das Material 3 kann als dreidimensionaler Körper betrachtet werden. Das Material 3 besitzt eine Länge L, welche initial zumindest grob bekannt ist und in weiterer Folge genau ermittelt werden kann. Weiters besitzt das Material 3 ein Elastizitätsmodul E, welches in der Regel nicht bekannt ist. Zudem besitzt das Material einen Querschnitt A, welcher vorzugsweise möglichst genau bekannt ist, um aus den Streckenparametern (welche das Produkt aus Querschnitt und Elastizitätsmodul E darstellen), z.B. aus den Fein-Streckenparametern - siehe unten, das Elastizitätsmodul E zu berechnen.

Wird das Material 3 in Längsrichtung einer Zugkraft F ausgesetzt, so entsteht abhängig von der Querschnittsfläche A des Materials eine Zugspannung $\sigma$ = F/A. Unter der Annahme, dass sich die Querschnittsfläche A nicht maßgeblich durch die von außen wirkende Zugkraft F verändert, ist die Zugspannung $\sigma$ direkt proportional zur Zugkraft F. Die von außen wirkende Zugkraft F erzeugt weiters eine Dehnung $\varepsilon$ des Materials 3. Für die Auslegung des Zugkraftreglers 9 wird nur ein Bereich mit einem linear-elastischen Zusammenhang der Zugspannung $\sigma$ und der Dehnung $\varepsilon$ betrachtet. Das bedeutet, dass in diesem Bereich die Dehnung $\varepsilon$ linear mit der Zugspannung $\sigma$ ansteigt, wobei die Steigung durch das Elastizitätsmodul E beschrieben wird. Wird die Zugspannung $\sigma$ wieder reduziert, so nimmt das Material 3 wieder die ursprüngliche Länge L ein. Die Zugspannung im Material 3 kann mit dem Hook'schen Gesetz $\sigma$ = E*$\varepsilon$ beschrieben werden. Da die Zugspannung $\sigma$ direkt proportional zur Zugkraft F angenommen wird, kann auch angenommen werden, dass die Zugkraft F direkt proportional zur Dehnung ε ist. Die Dehnung ε beschreibt die Relation der aus dem Aufbringen der Zugkraft F resultierende Längenänderung ΔL zur Ausgangslänge L0. Der Zusammenhang zwischen der Dehnung ε und der Zugkraft F ergibt sich zu F = E*A*ε.

Es wird nun zur Bestimmung der Stillstands-Reglerparameter $R_{F,o}$ ein Stillstandstest $T_0$ mit einer Liniengeschwindigkeit v von null durchgeführt, wobei ein beispielhafter Verlauf der Zugkraft F, sowie der Wicklersolldrehzahl v9 in Fig. 4 dargestellt ist. Die Durchführung des Stillstandstest $T_0$ zur Bestimmung der Stillstands-Reglerparameter $R_{F,o}$ kann auf einer Parametriereinheit 90, welche integraler Bestandteil des Zugkraftreglers 9 sein kann, erfolgen.

Während des Stillstandstests $T_0$ ist die Zugrollendrehzahl v6 null. Bei der Durchführung des Stillstandstest $T_0$ wird das Material 3 durch eine negative Wicklersolldrehzahl v9 = v0 gedehnt. Das bedeutet, dass die Wicklersolldrehzahl v9 = v0 entgegen der Drehrichtung des Wicklers 2, welche bei einem Produktionsbetrieb vorliegt, wirkt. Da sich die Zugrolle 6 nicht oder nur vernachlässigbar bewegt, wird ein Gegenmoment aufgebaut, die Liniengeschwindigkeit v bleibt jedoch während des Stillstandstests $T_0$ null. In einem ersten Abschnitt $T_{01}$ des Stillstandstests $T_0$ wird der Wickler 2 so lange mit der negativen Wicklersolldrehzahl v9 = v0 betrieben, bis die Zugkraft F eine Spannungszugkraft $F_{w1}$, vorzugsweise 10% des Zugkraft-Arbeitspunkts $F_{op}$, erreicht. Hat die Zugkraft F die Spannungszugkraft $F_{w1}$ erreicht, so wird in einer Initialisierungsphase $T_{02}$ wieder eine Wicklersolldrehzahl v9 von null vorgegeben, um die Zugkraft F konstant auf der Spannungszugkraft $F_{w1}$ zu halten.

Im Anschluss wird während einer Identifikationsphase $T_{03}$ die Zugkraft F auf eine Identifizierungszugkraft $F_{w2}$, vorzugsweise 90% des Stillstands-Zugkraft-Arbeitspunkts $F_{op}$, erhöht, indem dem Wickler 2 abermals die negative Wicklersolldrehzahl v9 = v0 vorgegeben wird. In der Identifikationsphase $T_{03}$ werden aus den Stillstands-Streckenparametern der Zugkraftstrecke $G_{F,0}$ die Stillstands-Reglerparameter $R_{F,o}$ bestimmt, was vorzugsweise mittels eines Frequenzkennlinienverfahrens erfolgt.

Der Zugkraftregler 9 kann mit den Stillstands-Reglerparametern $R_{F,o}$ parametriert werden, woraufhin die Zugkraft F auf den Stillstands-Zugkraft-Arbeitspunkt $F_{op}$ gesteigert wird. Danach kann ein Sprung ΔF auf die Zugkraft F aufgeschaltet werden, um anhand einer ersten Stillstands-Güte-Sprungantwort g0 die Güte der Stillstands-Reglerparameter $R_{F,o}$ zu bestimmen, beispielsweise mittels eines Rekursiven-Best-Fit-Verfahrens.

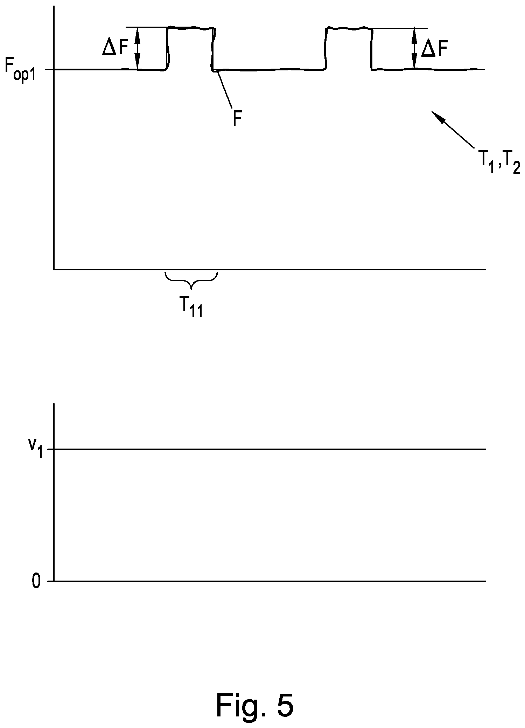

Liegen Stillstands-Reglerparameter $R_{F,o}$ mit ausreichender Güte vor, so kann ein Kriechtest T1 durchgeführt werden, um Fein-Reglerparameter $R_{F,v1}$ für eine erste Arbeits-Liniengeschwindigkeit $v_1$ zu ermitteln, wobei in Fig. 5 die Zugkraft F, sowie die konstante erste Liniengeschwindigkeit $v_1$ dargestellt sind. Die Durchführung des Kriechtests T1 zur Bestimmung der Fein-Reglerparameter $R_{F,v1}$ kann ebenso auf der Parametriereinheit 90, jedoch auch auf einer separat ausgeführten Fein-Parametriereinheit erfolgen.

Während des Kriechtests $T_1$ wird das Material 3 mit einer ersten Arbeits-Liniengeschwindigkeit $v_1$ bewegt. Der Zugkraftregler 9 wird mit den während des Stillstandstests $T_0$ ermittelten Stillstands-Reglerparametern $R_{F,o}$ parametriert. Während des Kriechtests $T_1$ wird für die Zugkraft F ein erster Zugkraft-Arbeitspunkt $F_{op1}$, welcher dem Stillstands-Zugkraft-Arbeitspunkt $F_{op}$ des Stillstandstests $T_0$ entsprechen kann, vorgegeben. Der Zugkraftregler 9 regelt die Wicklersolldrehzahl v9 des Wicklers 2, um die Zugkraft F auf den ersten Zugkraft-Arbeitspunkt $F_{op1}$ zu regeln.

Die Identifikation bei geschlossenem Regelkreis bringt den Vorteil mit sich, dass unbekannte Störungen durch den Zugkraftregler 9 kompensiert werden können. Zu berücksichtigen ist aber auch, dass die Regelstrecke rein durch die vom Zugkraftreglers 9 gelieferte Korrekturdrehzahl Δv9 angeregt wird. Deshalb wird auf die Zugkraft F ein Zugkraftsprung ΔF aufgeschaltet, was einer sprunghaften Änderung des Zugkraft-Arbeitspunkts $F_{op1}$ entspricht, um eine ausreichende Anregung der Regelstrecke zu gewährleisten. Mit dem Zugkraftsprung ΔF startet wiederum eine Identifikationsphase $T_{11}$. Aus einer Kriechsprungantwort h1 werden mittels des (Rekursiven-)Least-Squares-Verfahrens die Fein-Streckenparameter $G_{F,v1}$ der Zugkraftstrecke für die erste Arbeits-Liniengeschwindigkeit $v_1$ identifiziert. Da der Regelkreis geschlossen ist, erreicht die Zugkraft F im Idealfall den Zugkraft-Arbeitspunkt $F_{op1}$ nach der Anstiegszeit $t_r$. Da die Anstiegszeit $t_r$ für den Stillstands-Regler vorgegeben wurde, muss der nach den Stillstands-Reglerparametern $R_{F,o}$ parametrierte Zugkraftregler 9 im Kriechtest nicht notwendigerweise in der Lage sein die Anstiegszeit $t_r$ zu erfüllen.

Aus der erhaltenen ersten Sprungantwort h1 und den ermittelten Fein-Streckenparametern $G_{F,v1}$ der Zugkraftstrecke für die erste Arbeits-Liniengeschwindigkeit $v_1$ werden die Fein-Reglerparameter $R_{F,v1}$ für die erste Arbeits-Liniengeschwindigkeit $v_1$ ermittelt. Aus den Fein-Streckenparametern $G_{F,v1}$ kann das Elastizitätsmodul E und/oder die Länge L des Materials 3 für die erste Arbeits-Liniengeschwindigkeit $v_1$ ermittelt werden.

Es kann ein zweiter Zugkraftsprung ΔF auf die Zugkraft F aufgeschaltet werden, um anhand einer Kriech-Güte-Sprungantwort h2 die Güte der Fein-Reglerparameter $R_{F,v1}$ für die erste Arbeits-Liniengeschwindigkeit $v_1$ zu bestimmen, was mittels des Rekursiven-Best-Fit-Verfahrens erfolgen kann.

Es kann analog zum Kriechtest $T_1$ zusätzlich ein Geschwindigkeitstest $T_2$ durchgeführt werden, was einem Kriechtest $T_1$ bei einer höheren Liniengeschwindigkeit $v_2$, vorzugsweise bei einer maximalen Liniengeschwindigkeit, entspricht. Dabei wird der Zugkraftregler 9 mit den im Rahmen des Kriechtests $T_1$ ermittelten Fein-Reglerparametern $R_{F,v1}$ parametriert, um weitere Fein-Reglerparameter $G_{F,v2}$ für die zweite Arbeits-Liniengeschwindigkeit $v_2$ zu bestimmen. Der Geschwindigkeitstest $T_2$ kann während des Kriechtests $T_1$ erfolgen, indem eine zweite Arbeits-Liniengeschwindigkeit $v_2$ und eine Zugkraft F in der Höhe eines zweiten Zugkraft-Arbeitspunkts $F_{op2}$, der beispielsweise dem ersten Zugkraft-

Arbeitspunkts $F_{op1}$ entspricht, vorgesehen ist. Es wird ein Zugkraftsprung $\Delta F$ auf die Zugkraft F aufgeschaltet, eine Geschwindigkeitstestsprungantwort h2 ermittelt und aus der Geschwindigkeitstestsprungantwort h2 und die weiteren Fein-Streckenparameter $G_{F,v2}$ der Zugkraftstrecke identifiziert. Aus der Geschwindigkeitstestsprungantwort h2 und den weiteren Fein-Streckenparametern $G_{F,v2}$ werden weitere Fein-Reglerparameter $R_{F,v2}$ ermittelt. Ebenso kann durch Aufschalten eines Zugkraftsprungs $\Delta F$ auf die Zugkraft F die Güte der Fein-Reglerparameter überprüft werden.

Die Durchführung des Geschwindigkeitstests $T_2$ zur Bestimmung der weitere Fein-Reglerparameter $G_{F,v2}$ kann ebenso auf der Parametriereinheit 90, jedoch auch auf einer separat ausgeführten weiteren Fein-Parametriereinheit erfolgen.

Wurden zwischen der ersten Arbeits-Liniengeschwindigkeit $v_1$ und der zweiten (vorzugsweise maximalen) Arbeits-Liniengeschwindigkeit $v_2$ keine Reglerparameter bestimmt, so können zusätzliche Reglerparameter $R_{F,vx}$ für zusätzliche Arbeits-Liniengeschwindigkeiten $v_x$ auch offline, d.h. ohne weitere Testprozeduren, bestimmt werden. Dies kann durch Durchführung eines Koeffizientenvergleichs im Rahmen eines Frequenzkennlinienverfahrens erfolgen, oder durch Interpolation zwischen den Fein-Reglerparametern $R_{F,v1}$ und den weiteren Fein-Reglerparametern $R_{F,v2}$ entlang einer Funktion.

Die ermittelten zusätzliche Reglerparameter $R_{F,vx}$ für die zusätzlichen Liniengeschwindigkeiten $v_x$ (wie auch die Fein-Reglerparameter $R_{F,v1}$ für die erste Arbeits-Liniengeschwindigkeit $v_1$ und/oder die weiteren Fein-Reglerparameter $R_{F,v2}$ für die zweite Arbeits-Liniengeschwindigkeit $v_2$) können als Parametersatz für den Zugkraftregler 9 hinterlegt werden und im Betrieb bei Bedarf abgerufen werden.

Die Parametriereinheit 90 und/oder die Fein-Parametriereinheit und/oder die weitere Fein-Parametriereinheit können mikroprozessorbasierte Hardware umfassen, beispielsweise einen Computer oder Digitalen Signalprozessor (DSP), auf welchem entsprechende Software zur Durchführen der jeweiligen Funktion ausgeführt wird. Die Parametriereinheit 90 und/oder die Fein-Parametriereinheit und/oder die weitere Fein-Parametriereinheit können auch eine integrierte Schaltung umfassen, beispielsweise eine anwendungsspezifische integrierte Schaltung (ASIC) oder ein Field Programmable Gate Array (FPGA), auch mit einem Mikroprozessor. Die Parametriereinheit 90 und/oder die Fein-Parametriereinheit und/oder die weitere Fein-Parametriereinheit können aber auch einen analogen Schaltkreis oder analogen Computer umfassen. Auch Mischformen sind denkbar. Ebenso ist es möglich, dass verschiedene Funktionen auf derselben Hardware implementiert sind.

Es sei in Folge beispielhafterweise eine Identifikation von Streckenparametern einer Zugkraftstrecke G(s) dargestellt. Es werden die Stillstands-Streckenparameter der Zugkraftstrecke $G_{F,0}(s)$ bestimmt und zur Bestimmung der Stillstands-Reglerparameter $R_{F,0}$ verwendet (Stillstandstest To). Weiters werden die Fein-Streckenparameter der Zugkraftstrecke $G_{F,v1}(s)$ bestimmt und zur Bestimmung der Fein-Reglerparameter $R_{F,v1}$ eines Zugkraftreglers 9 verwendet (Kriechtest $T_1$). Die Identifikation der Streckenparameter wird also zunächst mittels eines Stillstandstests $T_0$, d.h. bei einer Liniengeschwindigkeit v von null, und anschließend mittels eines Kriechtests $T_1$, d.h. bei einer Liniengeschwindigkeit v ungleich 0, durchgeführt.

Das Material 3 besitzt eine Grunddehnung $\varepsilon_0$, wobei die Grunddehnung $\varepsilon_0$ bei schwach gewickeltem Material 3 auch null oder zumindest vernachlässigbar sein kann.

$$E = 2 \cdot 10^7 \frac{N}{m^2}$$

Es werden als Elastizitätsmodul , als Länge $L = 4,5m$, als Querschnitt $A = 2{,}8 \cdot 10^{-5}m$ und als Grunddehnung $\varepsilon_0 = 0{,}1786$ angenommen. Die Identifikation der Stillstands-Streckenparameter der Zugkraftstrecke $G_{F,v0}(s)$ wird zunächst ungeregelt im offenen Regelkreis und anschließend im geschlossenen Regelkreis durchgeführt.

Die allgemeine Übertragungsfunktion der Zugkraftstrecke G(s) beschreibt sich durch

$$G(s) = \frac{AE(1 + \epsilon_0)}{sL + v}$$

$$G(s) = \frac{b_0}{a_1 s + 1}$$

oder mit den Koeffizienten $b_0 = \frac{AE(1 + \epsilon_0)}{v}$ und $a_1 = \frac{L}{v}$ .

Bei Liniengeschwindigkeiten v größer 0 können somit zwei Stillstands-Streckenparameter der Zugkraftstrecke $G_{F,v}(s)$ geschätzt werden, womit die Länge L und das Elastizitätsmodul E bestimmt werden können.

Für den Stillstand, d.h. eine Liniengeschwindigkeit v=0, gilt die Zugkraftstrecke $G_{F,0}(s) = K_S \frac{1}{s}$ mit

$$K_S = \frac{AE(1 + \epsilon_0)}{L}$$ .

Im Stillstand gibt es somit nur einen Koeffizienten $K_S$, weshalb hier auch nur ein Streckenparameter geschätzt werden kann. Aus diesem Stillstands-Streckenparameter kann das Elastizitätsmodul E nur bei bekannter Länge L des Materials 3 ermittelt werden.

Es wird nun bei offenem Regelkreis ein Stillstandstest $T_0$ durchgeführt, wobei davon ausgegangen wird, dass das Material 3 in der Bahnverarbeitungsmaschine 1 eine Liniengeschwindigkeit v von 0 m/min aufweist. Es wird, wie in Fig. 4 dargestellt, ein Sprung auf die Wicklersolldrehzahl v9 des Wicklers 2 aufgeschaltet. Weiters wird eine Sprungantwort ermittelt, d.h. beobachtet, wie sich die Zugkraft F verhält.

Aus der Sprungantwort werden in Folge mittels des (Rekursiven-)Least-Squares-Verfahrens die Stillstands-Streckenparameter der Zugkraftstrecke $G_{F,0}(s)$ in Form des Koeffizienten Ks ermittelt. Somit ergibt sich in diesem Beispiel der Koeffizienten mit $K_S$ = 144,66. Bei bekannter Länge L = 4,5 m ergibt sich für das Elastizitätsmodul

$$E = \frac{K_S L}{A(1+\epsilon_0)} = 1{,}97 \cdot 10^7 \, \frac{N}{m^2}$$

Da nun alle erforderlichen Stillstands-Streckenparameter der Zugkraftstrecke $G_{F,0}(s)$ bekannt sind, kann die Ermittlung der Stillstands-Reglerparameter $R_{F,v0}$ und somit der Entwurf des Reglers erfolgen.

$$R_F(s) = v_R \left( \frac{sT_R + 1}{s} \right)$$

Der Regler besitzt final die Form und wird mit den Vorgaben $\omega_c t_r \approx 1{,}5$ sowie $\varnothing[°] + \ddot{u}[\%] \approx 70$ entworfen, wobei $\omega_c$ die Durchtrittsfrequenz des offenen Kreises, $t_r$ die Anstiegszeit der Sprungantwort des geschlossenen Kreises, ø die Phasenreserve und ü das Überschwingen der Sprungantwort des geschlossenen Kreises beschreibt.

Es wird nun das Frequenzkennlinienverfahren angewendet. Hierzu wird eine gewünschte Anstiegszeit $t_r$ vorgegeben, beispielsweise 0,17s. Damit ergibt sich somit eine Durchtrittsfrequenz

$$\omega_c = \frac{1{,}5}{t_r} = 8{,}823 Hz$$

. Mit einem Überschwingen ü von ü = 10% beträgt die Phasenreserve ø[°] = 70 - ü[%] = 60°. Das Argument der Übertragungsfunktion

$$G(j\omega) = \frac{K_S}{j\omega}$$

an der Durchtrittsfrequenz $\omega_c$ berechnet sich mit und arg($G(j\omega)$) = -90°.

Die Zeitkonstante $T_R$ berechnet sich weiters mit

$$T_R = \frac{1}{\omega_c} \tan\left(-90 + \varnothing - \arg\left(G(j\omega_c)\right)\right) = 0{,}1963.$$

Damit wurde die Zeitkonstante $T_R$ als erster Reglerparameter $R_{F,v0}$ bestimmt.

Der Betrag der Strecke an der Durchtrittsfrequenz beträgt:

$$|G(j\omega_c)| = \frac{|K_S|}{|j\omega_c|} = 16{,}40$$

Somit ergibt sich für den Zugkraftregler 9 die Verstärkung

$$V_R = \frac{\omega_c}{|G(j\omega_c)|\sqrt{1+(T_R\omega_c)^2}} = 0{,}2690$$

.

Somit wurden für den Regler

$$R_F(s) = v_R \left( \frac{sT_R + 1}{s} \right)$$

die Zeitkonstante $T_R$ und die Verstärkung $V_R$ als Stillstands-Reglerparameter $R_{F,0}$ bestimmt und der Zugkraftregler 9 mit diesen Stillstands-Reglerparametern $R_{F,v0}$ parametriert. Damit ist der Reglerentwurf für den Stillstandstest $T_0$ abgeschlossen.

Der mittels des Stillstandstests $T_0$ parametrierte Zugkraftregler 9 wird nun verwendet, um bei einem geschlossenen Regelkreis einen Kriechtest $T_1$ durchzuführen, wobei beispielhaft davon ausgegangen wird, dass das Material 3 in der Bahnverarbeitungsmaschine 1 eine Liniengeschwindigkeit v von 15 m/min aufweist. Es wird in Folge auf die Zugkraft F ein Zugkraftsprung ΔF aufgeschaltet, wie in Fig. 5 dargestellt.

Aus dem Zugkraftsprung ΔF werden in Folge mittels des (Rekursiven-)Least-Squares-Verfahrens die Fein-Streckenparameter der Zugkraftstrecke $G_{F,v1}(s)$ in Form der Koeffizienten a1 und b0 ermittelt, welche sich beispielsweise mit $a1$ = 18,095 und bo = 2691,1 ergeben. Somit ergibt sich für die Länge L = $a_1$ v = 4,52 m und für das Elastizitätsmodul

$$E = \frac{b_0 v}{A(1+\epsilon_0)} = 2,04 \cdot 10^7 \, \frac{N}{m^2}$$

. Bei Vergleich mit dem oben im Rahmen des

Stillstandstests $T_0$ ermittelten Ergebnis für das Elastizitätsmodul von E = 1,97.10$^7$ N/m zeigt sich, dass das Ergebnis des Stillstandstests bereits ausreichend exakt war.

Die Bestimmung der Fein-Reglerparameter $R_{F,v1}$ des Zugkraftreglers 6 für den Kriechtests $T_1$ erfolgt grundlegend analog zur Bestimmung der Stillstands-Reglerparameter $R_{F,0}$ beim Stillstandstest $T_0$.

Für die Bestimmung der Stillstands-Streckenparameter $G_{F,0}$ wird jedoch die Zugkraft F auf eine Identifizierungszugkraft $F_{w2}$ erhöht, wogegen für die Bestimmung der der Fein-Streckenparameter $G_{F,v1}$ ein Zugkraftsprung $\Delta F$ aufgeschaltet wird.

Das Argument der Übertragungsfunktion an der Durchtrittsfrequenz $\omega_c$ berechnet sich mit

$$arg\left(G\left(j\omega_c\right)\right) = arg\left(\frac{b_0}{a_1 j\omega_c + 1}\right) = -89,64°$$

. Die Zeitkonstante $T_R$ berechnet sich weiters mit

$$T_R = \frac{1}{\omega_c}\tan(-90 + \varnothing + arg\left(G\left(j\omega_c\right)\right)) = 0,1929$$

. Damit wurde die Zeitkonstante $T_R$ als Reglerparameter $R_{F,v1}$ bestimmt.

$$\left|G\left(j\omega_c\right)\right| = \frac{\left|b_0\right|}{\left|1 + a_1 j\omega_c\right|} = 16,86$$

Der Betrag der Strecke an der Durchtrittsfrequenz beträgt:                                                                  .

$$V_R = \frac{\omega_c}{\left|G\left(j\omega_c\right)\right|\sqrt{1+(T_R\omega_c)^2}} = 0,2651$$

.

Somit ergibt sich für den Zugkraftregler 9 die Verstärkung

$$R_F(s) = v_R\left(\frac{sT_R+1}{s}\right)$$

Somit wurden für den Regler                den die Zeitkonstante $T_R$ und die Verstärkung $V_R$ als Fein-Reglerparameter $R_{F,v1}$ bestimmt. Damit ist der Reglerentwurf für den Kriechtest abgeschlossen, womit der Zugkraftregler 9 mit den Fein-Reglerparametern $R_{F,v1}$ parametriert werden kann.

**Patentansprüche**

1. Verfahren zur Parametrierung eines Zugkraftreglers (9) einer geregelten Walze (2) einer Bahnverarbeitungsmaschine (1), wobei der Zugkraftregler (9) die Drehzahl ($v_9$) der geregelten Walze (2) regelt, um auf der Bahnverarbeitungsmaschine (1) ein Material (3) mit einer Liniengeschwindigkeit (v), beaufschlagt mit der Zugkraft (F), von der geregelten Walze (2) zu einer weiteren Walze (6) oder von einer weiteren Walze (6) zur geregelten Walze (2) zu transportieren, **dadurch gekennzeichnet, dass** während eines Stillstandstests (T0) bei einer Liniengeschwindigkeit (v) von null die Zugkraft (F) auf eine Identifizierungszugkraft ($F_{w2}$), vorzugsweise 90% eines vorgegebenen Stillstands-Zugkraft-Arbeitspunkts ($F_{op}$), erhöht wird, um Stillstands-Streckenparameter der Zugkraftstrecke ($G_{F,0}$) zu bestimmen und aus den Stillstands-Streckenparameter der Zugkraftstrecke ($G_{F,0}$), vorzugsweise mittels eines Frequenzkennlinienverfahrens, Stillstands-Reglerparameter ($R_{F,o}$) des Zugkraftreglers (9) zu ermitteln, **und dass** der Zugkraftregler (9) mit den Stillstands-Reglerparametern ($R_{F,o}$) parametriert wird.

2. Verfahren nach Anspruch 1, **dadurch gekennzeichnet, dass** die Stillstands-Streckenparameter der Zugkraftstrecke ($G_{F,0}$) mittels eines, vorzugsweise rekursiven, Least-Square-Verfahrens bestimmt werden **oder, dass** aus den Stillstands-Streckenparametern der Zugkraftstrecke ($G_{F,0}$) ein Elastizitätsmodul (E) des Materials (3) ermittelt wird **oder, dass** die Stillstands-Reglerparameter ($R_{F,o}$) mittels eines Frequenzkennlinienverfahrens ermittelt werden.

3. Verfahren nach einem der Ansprüche 1 oder 2, **dadurch gekennzeichnet, dass** die Zugkraft (F) vor der Erhöhung auf die Identifizierungszugkraft ($F_{w2}$) auf eine Spannungszugkraft ($F_{w1}$), vorzugsweise 10% des Stillstands-Zugkraft-Arbeitspunkts ($F_{op}$), erhöht wird.

4. Verfahren nach einem der Ansprüche 1 bis 3, **dadurch gekennzeichnet, dass** die Zugkraft (F) auf die Stillstands-Arbeits-Zugkraft ($F_{op}$) gesteigert wird, **und dass** nach Erreichen des Zugkraft-Arbeitspunkts ($F_{op}$) ein Zugkraftsprung ($\Delta F$) auf die Zugkraft (F) aufgeschaltet wird, um anhand einer ersten Stillstands-Güte-Sprungantwort (g0) die Güte der Stillstands-Reglerparameter ($R_{F,o}$) zu bestimmen.

5. Verfahren nach einem der Ansprüche 1 bis 4, **dadurch gekennzeichnet, dass** nach dem Stillstandstest (T0) ein Kriechtests (T1) durchgeführt wird, **dass** eine erste Arbeits-Liniengeschwindigkeit ($v_1$) und eine Zugkraft (F) in der Höhe eines ersten Zugkraft-Arbeitspunkts ($F_{op1}$) vorgesehen ist, **dass** ein Zugkraftsprung ($\Delta F$) auf die Zugkraft (F) aufgeschaltet, eine Kriechsprungantwort (h1) ermittelt und aus der Kriechsprungantwort (h1) Fein-Streckenparameter ($G_{F,v1}$) der Zugkraftstrecke identifiziert werden, **und dass** aus der Kriechsprungantwort (h1) und den Kriech-Streckenparametern ($G_{F,v1}$) Fein-Reglerparameter ($R_{F,v1}$) ermittelt werden **und dass** der Zugkraftregler (9) mit den Fein-Reglerparametern ($R_{F,v1}$) parametriert wird.

6. Verfahren nach Anspruch 5, **dadurch gekennzeichnet, dass** die Fein-Streckenparameter ($G_{F,v1}$) der Zugkraftstrecke mittels eines, vorzugweise rekursiven, Least-Square-Verfahrens identifiziert werden, **oder dass** aus den Fein-Streckenparametern ($G_{F,v1}$) das Elastizitätsmodul (E) und/oder die Länge (L) des Mediums (3) für die erste Arbeits-Liniengeschwindigkeit ($v_1$) ermittelt werden, **oder dass** die Fein-Reglerparameter ($R_{F,v1}$) mittels eines Frequenzkennlinienverfahrens ermittelt werden.

7. Verfahren nach einem der Ansprüche 5 oder 6, **dadurch gekennzeichnet, dass** ein Zugkraftsprung ($\Delta F$) auf die Zugkraft (F) aufgeschaltet wird, um anhand einer Kriech-Güte-Sprungantwort (h2), vorzugsweise mittels des Best-Fit-Verfahrens, die Güte der Fein-Reglerparameter ($R_{F,v1}$) für die erste Arbeits-Liniengeschwindigkeit ($v_1$) zu bestimmen

8. Verfahren nach einem der Ansprüche 1 bis 7, **dadurch gekennzeichnet, dass** die Stillstands-Reglerparameter ($R_{f,v0}$) abgespeichert werden, **dass** aus den Stillstands-Reglerparametern Extrapolations-Geschwindigkeits-Reglerparameter für eine Anzahl Extrapolations-Liniengeschwindigkeiten (v) extrapoliert werden, **und dass** im Betrieb der Bahnverarbeitungsmaschine (1) bei einer Liniengeschwindigkeit (v) im Bereich einer der Extrapolations-Liniengeschwindigkeiten (v) die zugehörigen Extrapolations-Geschwindigkeits-Reglerparameter zur Parametrierung des Zugkraftreglers (9) abgerufen werden.

9. Verfahren nach einem der Ansprüche 5 bis 8, **dadurch gekennzeichnet, dass** die Fein-Reglerparameter ($R_{f,v1}$) für die erste Arbeits-Liniengeschwindigkeit (v1) abgespeichert werden, **und dass** im Betrieb der Bahnverarbeitungsmaschine (1) bei einer Liniengeschwindigkeit (v) im Bereich der ersten Arbeits-Liniengeschwindigkeit ($v_1$) die Fein-Reglerparameter ($R_{f,v1}$) zur Parametrierung des Zugkraftreglers (9) abgerufen werden.

10. Verfahren nach einem der Ansprüche 5 bis 9, **dadurch gekennzeichnet, dass** nach dem Kriechtest ($T_1$) ein Geschwindigkeitstest ($T_2$) durchgeführt wird, wobei eine zweite Arbeits-Liniengeschwindigkeit ($v_2$) und einer Zugkraft (F) in der Höhe eines zweiten Zugkraft-Arbeitspunkts ($F_{op2}$) vorgesehen ist, **dass** ein Zugkraftsprung ($\Delta F$) auf die Zugkraft (F) aufgeschaltet wird, eine Geschwindigkeitstestsprungantwort (h2) ermittelt und daraus weitere Fein-Streckenparameter ($G_{F,v2}$) der Zugkraftstrecke identifiziert werden, **und dass** aus der Geschwindigkeitstestsprungantwort (h2) und den weiteren Fein-Streckenparametern ($G_{F,v2}$) weitere Fein-Reglerparameter ($R_{F,v2}$) ermittelt werden, **und dass** der Zugkraftregler (9) mit den weiteren Fein-Reglerparametern ($R_{F,v2}$) parametriert wird.

11. Verfahren nach Anspruch 10, **dadurch gekennzeichnet, dass** die weiteren Fein-Reglerparameter ($R_{f,v2}$) für die zweite Arbeits-Liniengeschwindigkeite ($v_2$) abgespeichert werden, **und dass** im Betrieb der Bahnverarbeitungsmaschine (1) bei einer Liniengeschwindigkeit (v) im Bereich der zweiten Arbeits-Liniengeschwindigkeit ($v_2$) die weiteren Fein-Reglerparameter ($R_{f,v2}$) zur Parametrierung des Zugkraftreglers (9) abgerufen werden und der Zugkraftregler (9) mit den weiteren Fein-Reglerparameter ($R_{f,v2}$) parametriert wird.

12. Verfahren nach Anspruch 10, **dadurch gekennzeichnet, dass** aus den Fein-Reglerparametern ($R_{F,v1}$) und den weiteren Fein-Reglerparametern ($R_{F,v2}$) zusätzliche Fein-Reglerparameter ($R_{f,vx}$) für zusätzliche Arbeits-Liniengeschwindigkeiten ($v_x$) bestimmt werden, **und dass** der Zugkraftregler (9) mit den zusätzlichen Fein-Reglerparametern ($R_{f,vx}$) parametriert wird.

13. Verfahren nach Anspruch 12, **dadurch gekennzeichnet, dass** die zusätzlichen Fein-Reglerparameter ($R_{f,vx}$) für die zusätzlichen Arbeits-Liniengeschwindigkeiten ($v_x$) abgespeichert werden **und dass** im Betrieb der Bahnverarbeitungsmaschine (1) bei einer Liniengeschwindigkeit (v) im Bereich der jeweiligen zusätzlichen Arbeits-Linienge-

schwindigkeit ($v_x$) mit den zugehörigen Fein-Reglerparametern ($R_{f,vx}$) die zugehörigen zusätzlichen Fein-Reglerparameter ($R_{f,vx}$) zur Parametrierung des Zugkraftregler (9) abgerufen werden und der Zugkraftregler (9) mit den zugehörigen zusätzlichen Fein-Reglerparametern ($R_{f,vx}$) parametriert wird.

14. Verwendung eines Zugkraftreglers (9), parametriert gemäß eines Verfahrens nach einem der Ansprüche 1 bis 13 zur Regelung einer Zugkraft (F) eines Materials (3) in einer Bahnverarbeitungsmaschine (1), wobei das Material (3) mit einer Liniengeschwindigkeit (v) und beaufschlagt mit der Zugkraft (F) von einer geregelten Walze (2) zu einer weiteren Walze (6) oder von einer weiteren Walze (6) zu einer geregelten Walze (2) transportiert wird.

15. Zugkraftregler (9) einer geregelten Walze (2) einer Bahnverarbeitungsmaschine (1), auf welcher ein Material (3) mit einer Liniengeschwindigkeit (v), beaufschlagt mit einer Zugkraft (F), von der geregelten Walze (2) zu einer weiteren Walze (6) oder von einer weiteren Walze (6) zu einer geregelten Walze (2) transportiert wird, wobei der Zugkraftregler (9) eine Parametriereinheit (90) zum Parametrieren des Zugkraftreglers (9) aufweist und wobei der Zugkraftregler (9) ausgestaltet ist, die Zugkraft (F) über eine Drehzahl ($v_9$) der geregelten Walze (2) zu regeln, **dadurch gekennzeichnet, dass** die Parametriereinheit (90) ausgestaltet ist, während eines Stillstandstests (T0) bei einer Liniengeschwindigkeit (v) von null die Zugkraft (F) auf eine Identifizierungszugkraft ($F_{w2}$), vorzugsweise 90% eines vorgegebenen Stillstands-Zugkraft-Arbeitspunkts ($F_{op}$), zu erhöhen, um Stillstands-Streckenparameter der Zugkraftstrecke ($G_{F,0}$) zu bestimmen und aus den Stillstands-Streckenparametern der Zugkraftstrecke ($G_{F,0}$), vorzugsweise mittels eines Frequenzkennlinienverfahrens, Stillstands-Reglerparameter ($R_{F,o}$) des Zugkraftreglers (9) zu ermitteln, und den Zugkraftregler (9) mit den Stillstands-Reglerparametern ($R_{F,o}$) zu parametrieren.

## Claims

1. A method for parameterization of a tractive force controller (9) of a controlled roller (2) of a web-processing machine (1), the tractive force controller (9) controlling the speed ($v_9$) of the controlled roller (2) in order to transport a material (3) on the web-processing machine (1) from the controlled roller (2) to a further roller (6) or from a further roller (6) to the controlled roller (2) at a line speed (v) while being subjected to the tractive force (F), **characterized in that** during a standstill test (T0) at a line speed (v) of zero, the tractive force (F) is increased to an identification tractive force ($F_{w2}$), preferably 90% of a predetermined standstill tractive force operating point ($F_{op}$), to determine standstill system parameters of the tractive force system ($G_{F,0}$) and to calculate standstill controller parameters ($R_{F,0}$) of the tractive force controller (9) from the standstill system parameters of the tractive force system ($G_{F,0}$), preferably by means of a frequency characteristic method, **and in that** the tractive force controller (9) is parameterized using the standstill controller parameters ($R_{F,o}$).

2. The method according to claim 1, **characterized in that** the standstill system parameters of the tractive force system ($G_{F,0}$) are determined by means of a preferably recursive least square method, **or in that** a modulus of elasticity (E) of the material (3) is determined from the standstill system parameters of the tractive force system ($G_{F,0}$), **or in that** the standstill controller parameters ($R_{F,o}$) are calculated by means of a frequency characteristic method.

3. The method according to any of claims 1 or 2, **characterized in that** the tractive force (F) is increased to a tensile tractive force ($F_{w1}$), preferably 10% of the standstill tractive force operating point ($F_{op}$), before the increase to the identification tractive force ($F_{w2}$).

4. The method according to any of claims 1 to 3, **characterized in that** the tractive force (F) is increased to the standstill operating tractive force ($F_{op}$), **and in that,** after the tractive force operating point ($F_{op}$) is reached, a jump in tractive force ($\Delta F$) is applied to the tractive force (F) in order to determine the quality of the standstill controller parameters ($R_{F,o}$) using a first standstill quality step response (g0).

5. The method according to any of claims 1 to 4, **characterized in that,** after the standstill test (T0), a creep test (T1) is carried out, **in that** a first operating line speed ($v_1$) and a tractive force (F) at the level of a first tractive force operating point ($F_{op1}$) is provided, **in that** a jump in tractive force ($\Delta F$) is applied to the tractive force (F), a creep step response (h1) is determined and fine system parameters ($G_{F,v1}$) are identified based on the creep step response (h1) of the tractive force system, **and in that** fine controller parameters ($R_{F,v1}$) are calculated from the creep step response (h1) and the creep system parameters ($G_{F,v1}$), **and in that** the tractive force controller (9) is parameterized using the fine controller parameters ($R_{F,v1}$).

6. The method according to claim 5, **characterized in that** the fine system parameters ($G_{F,v1}$) of the tractive force system are identified by means of a preferably recursive least square method, **or in that** the modulus of elasticity (E) and/or the length (L) of the medium (3) is calculated from the fine system parameters ($G_{F,v1}$) for the first operating line speed ($v_1$), **or in that** the fine controller parameters ($R_{F,v1}$) are determined by means of a frequency characteristic method.

7. The method according to any of claims 5 or 6, **characterized in that** a jump in tractive force ($\Delta F$) is applied to the tractive force (F) in order to determine the quality of the fine controller parameters ($R_{F,v1}$) for the first operating line speed ($v_1$) using a creep quality step response (h2), preferably by means of the best fit method.

8. The method according to any of claims 1 to 7, **characterized in that** the standstill controller parameters ($R_{f,v0}$) are stored, **in that** extrapolation speed controller parameters for a number of extrapolation line speeds (v) are extrapolated from the standstill controller parameters, **and that** during operation of the web-processing machine (1) at a line speed (v) within the range of one of the extrapolation line speeds (v), the associated extrapolation speed controller parameters for parameterizing the tractive force controller (9) are called up.

9. The method according to any of claims 5 to 8, **characterized in that** the fine controller parameters ($R_{f,v1}$) for the first operating line speed (v1) are stored, **and in that** during operation of the web-processing machine (1) at a line speed (v) within the range of the first operating line speed ($v_1$), the fine controller parameters ($R_{f,v1}$) for parameterizing the tractive force controller (9) are called up.

10. The method according to any of claims 5 to 9, **characterized in that** a speed test ($T_2$) is carried out after the creep test ($T_1$), a second operating line speed ($v_2$) and a tractive force (F) at the level of a second tractive force operating point ($F_{op2}$) being provided, **in that** a jump in tractive force ($\Delta F$) is applied to the tractive force (F), a speed test step response (h2) is determined and further fine system parameters ($G_{F,v2}$) of the tractive force system are identified therefrom, **and in that** further fine controller parameters ($R_{F,v2}$) are calculated from the speed test step response (h2) and the further fine system parameters ($G_{F,v2}$), **and in that** the tractive force controller (9) is parameterized using the further fine controller parameters ($R_{F,v2}$).

11. The method according to claim 10, **characterized in that** the further fine controller parameters ($R_{f,v2}$) for the second operating line speed ($v_2$) are stored, **and in that** during operation of the web-processing machine (1) at a line speed (v) within the range of the second operating line speed ($v_2$), the other fine controller parameters ($R_{f,v2}$) for parameterizing the tractive force controller (9) are called up and the tractive force controller (9) is parameterized using the further fine controller parameters ($R_{f,v2}$).

12. The method according to claim 10, **characterized in that** additional fine controller parameters ($R_{f,vx}$) for additional operating line speeds ($v_x$) are determined from the fine controller parameters ($R_{F,v1}$) and the further fine controller parameters ($R_{F,v2}$), **and in that** the tractive force controller (9) is parameterized using the additional fine controller parameters ($R_{f,vx}$).

13. The method according to claim 12, **characterized in that** the additional fine controller parameters ($R_{f,vx}$) for the additional operating line speeds ($v_x$) are stored, **and in that** during operation of the web-processing machine (1) at a line speed (v) within the range of the respective additional operating line speed ($v_x$) with the associated fine controller parameters ($R_{f,vx}$), the associated additional fine controller parameters ($R_{f,vx}$) are called up to parameterize the tractive force controller (9) and the tractive force controller (9) is parameterized using the associated additional fine controller parameters ($R_{f,vx}$).

14. Use of a tractive force controller (9), parameterized according to a method according to any of claims 1 to 13 for controlling a tractive force (F) of a material (3) in a web-processing machine (1), the material (3) being transported from a controlled roller (2) to a further roller (6) or from a further roller (6) to a controlled roller (2) at a line speed (v) and while being subjected to the tractive force (F).

15. Tractive force controller (9) of a controlled roller (2) of a web-processing machine (1), on which a material (3) is transported from the controlled roller (2) to a further roller (6) or from a further roller (6) to a controlled roller (2) at a line speed (v), subjected to a tractive force (F), the tractive force controller (9) comprising a parameterization unit (90) for parameterization of the tractive force controller (9), the tractive force controller (9) being designed to control the tractive force (F) via a speed (vg) of the controlled roller (2), **characterized in that,** the parameterization unit (90) is designed to, during a standstill test (T0) at a line speed (v) of zero, increase the tractive force (F) to an identification tractive force ($F_{w2}$), preferably 90% of a predetermined standstill tractive force operating point ($F_{op}$),

in order to determine the standstill system parameters of the tractive force system ($G_{F,0}$) and calculate standstill controller parameters ($R_{F,o}$) of the tractive force controller (9) from the standstill system parameters of the tractive force system ($G_{F,0}$), preferably by means of a frequency characteristic method, and parameterize the tractive force controller (9) with the standstill controller parameters ($R_{F,o}$).

## Revendications

1. Procédé permettant le paramétrage d'un régulateur de force de traction (9) d'un rouleau régulé (2) d'une machine de traitement de bande (1), dans lequel le régulateur de force de traction (9) régule la vitesse de rotation ($v_9$) du rouleau régulé (2) pour transporter, sur la machine de traitement de bande (1), un matériau (3), lequel est sollicité par la force de traction (F), à une vitesse linéaire (v) du rouleau régulé (2) à un autre rouleau (6) ou d'un autre rouleau (6) au rouleau régulé (2), **caractérisé en ce que,** pendant un test à l'arrêt (T0) à une vitesse linéaire (v) de zéro, la force de traction (F) est augmentée à une force de traction d'identification ($F_{w2}$), de préférence de 90 % d'un point de travail de force de traction à l'arrêt ($F_{op}$) prédéfini, afin de déterminer des paramètres de parcours à l'arrêt du parcours de force de traction ($G_{F,0}$) et de définir, à partir des paramètres de parcours à l'arrêt du parcours de force de traction ($G_{F,0}$), de préférence au moyen d'un procédé de caractéristiques de fréquence, des paramètres de régulateur à l'arrêt ($R_{F,o}$) du régulateur de force de traction (9),
   **et en ce que** le régulateur de force de traction (9) est paramétré avec les paramètres de régulateur à l'arrêt ($R_{F,o}$).

2. Procédé selon la revendication 1, **caractérisé en ce que** les paramètres de parcours à l'arrêt du parcours de force de traction ($G_{F,0}$) sont déterminés au moyen d'un procédé des moindres carrés, de préférence récursif, **ou en ce que**, à partir des paramètres de parcours à l'arrêt du parcours de force de traction ($G_{F,0}$), un module d'élasticité (E) du matériau (3) est défini, **ou en ce que** les paramètres de régulateur à l'arrêt ($R_{F,o}$) sont définis au moyen d'un procédé de caractéristiques de fréquence.

3. Procédé selon l'une des revendications 1 ou 2, **caractérisé en ce que** la force de traction (F) est augmentée, avant l'augmentation à la force de traction d'identification ($F_{w2}$), à une force de traction de tension ($F_{w1}$), de préférence de 10 % du point de travail de force de traction à l'arrêt ($F_{op}$).

4. Procédé selon l'une des revendications 1 à 3, **caractérisé en ce que** la force de traction (F) est augmentée à la force de traction de travail à l'arrêt ($F_{op}$) **et en ce que**, après avoir atteint le point de travail de force de traction ($F_{op}$), un saut de force de traction ($\Delta F$) est appliqué à la force de traction (F) afin de déterminer, à l'aide d'une première réponse de saut de qualité à l'arrêt (g0), la qualité des paramètres de régulateur à l'arrêt ($R_{F,o}$).

5. Procédé selon l'une des revendications 1 à 4, **caractérisé en ce que,** après le test à l'arrêt (T0), un test de fluage (T1) est effectué, **en ce qu'**une première vitesse linéaire de travail ($v_1$) et une force de traction (F) sont prévues au niveau d'un premier point de travail de force de traction ($F_{op1}$), **en ce qu'**un saut de force de traction ($\Delta F$) est appliqué à la force de traction (F), une réponse de saut de fluage (h1) est définie et des paramètres de parcours fins ($G_{F,v1}$) du parcours de force de traction sont identifiés à partir de la réponse de saut de fluage (h1), **et en ce que** des paramètres de régulateur fins ($R_{F,v1}$) sont définis à partir de la réponse de saut de fluage (h1) et des paramètres de parcours de fluage ($G_{F,v1}$), **et en ce que** le régulateur de force de traction (9) est paramétré avec les paramètres de régulateur fins ($R_{F,v1}$).

6. Procédé selon la revendication 5, **caractérisé en ce que** les paramètres de parcours fins ($G_{F,v1}$) du parcours de force de traction sont identifiés au moyen d'un procédé des moindres carrés, de préférence récursif, **ou en ce que** le module d'élasticité (E) et/ou la longueur (L) du milieu (3) pour la première vitesse linéaire de travail ($v_1$) sont définis à partir des paramètres de parcours fins ($G_{F,v1}$), **ou en ce que** les paramètres de régulateur fins ($R_{F,v1}$) sont définis au moyen d'un procédé de caractéristiques de fréquence.

7. Procédé selon l'une des revendications 5 ou 6, **caractérisé en ce qu'**un saut de force de traction ($\Delta F$) est appliqué à la force de traction (F) pour déterminer la qualité des paramètres de régulateur fins ($R_{F,v1}$) pour la première vitesse linéaire de travail ($v_1$) à l'aide d'une réponse de saut de qualité de fluage (h2), de préférence au moyen du procédé d'ajustement optimal.

8. Procédé selon l'une des revendications 1 à 7, **caractérisé en ce que** les paramètres de régulateur à l'arrêt ($R_{f,v0}$) sont mémorisés, **en ce que** des paramètres de régulateur de vitesse d'extrapolation pour un certain nombre de vitesses linéaires d'extrapolation (v) sont extrapolés à partir des paramètres de régulateur à l'arrêt,

**et en ce que**, lors du fonctionnement de la machine de traitement de bande (1) à une vitesse linéaire (v) dans la plage de l'une des vitesses linéaires d'extrapolation (v), les paramètres de régulateur de vitesse d'extrapolation associés sont récupérés pour le paramétrage du régulateur de force de traction (9).

9. Procédé selon l'une des revendications 5 à 8, **caractérisé en ce que** les paramètres de régulateur fins ($R_{f,v1}$) pour la première vitesse linéaire de travail (v1) sont mémorisés, **et en ce que**, lors du fonctionnement de la machine de traitement de bande (1) à une vitesse linéaire (v) dans la plage de la première vitesse linéaire de travail ($v_1$), les paramètres de régulateur fins ($R_{f,v1}$) sont récupérés pour le paramétrage du régulateur de force de traction (9).

10. Procédé selon l'une des revendications 5 à 9, **caractérisé en ce que,** après le test de fluage ($T_1$), un test de vitesse ($T_2$) est effectué, dans lequel une seconde vitesse linéaire de travail ($v_2$) et une force de traction (F) sont prévues au niveau d'un second point de travail de force de traction ($F_{op2}$), **en ce qu'**un saut de force de traction ($\Delta F$) est appliqué à la force de traction (F), une réponse de saut de test de vitesse (h2) est définie et, à partir de ceci, d'autres paramètres de parcours fins ($G_{F,v2}$) du parcours de force de traction sont identifiés, **et en ce que** d'autres paramètres de régulateur fins ($R_{F,v2}$) sont définis à partir de la réponse de saut de test de vitesse (h2) et des autres paramètres de parcours fins ($G_{F,v2}$),
et en ce que le régulateur de force de traction (9) est paramétré avec les autres paramètres de régulateur fins ($R_{F,v2}$).

11. Procédé selon la revendication 10, **caractérisé en ce que** les autres paramètres de régulateur fins ($R_{f,v2}$) sont mémorisés pour les secondes vitesses linéaires de travail ($v_2$), **et en ce que**, lors du fonctionnement de la machine de traitement de bande (1) à une vitesse linéaire (v) dans la plage de la seconde vitesse linéaire de travail ($v_2$), les autres paramètres de régulateur fins ($R_{f,v2}$) sont récupérés pour le paramétrage du régulateur de force de traction (9) et le régulateur de force de traction (9) est paramétré avec les autres paramètres de régulateur fins ($R_{f,v2}$).

12. Procédé selon la revendication 10, **caractérisé en ce que** des paramètres de régulateur fins supplémentaires ($R_{f,vx}$) pour des vitesses linéaires de travail supplémentaires ($v_x$) sont déterminés à partir des paramètres de régulateur fins ($R_{F,v1}$) et des autres paramètres de régulateur fins ($R_{F,v2}$), **et en ce que** le régulateur de force de traction (9) est paramétré avec les paramètres de régulateur fins supplémentaires ($R_{f,vx}$).

13. Procédé selon la revendication 12, **caractérisé en ce que** les paramètres de régulateur fins supplémentaires ($R_{f,vx}$) pour les vitesses linéaires de travail supplémentaires ($v_x$) sont mémorisés **et en ce que**, lors du fonctionnement de la machine de traitement de bande (1) à une vitesse linéaire (v) dans la plage de la vitesse linéaire de travail supplémentaire ($v_x$) respective avec les paramètres de régulateur fins ($Rf_{,vx}$) associés, les paramètres de régulateur fins supplémentaires ($R_{f,vx}$) associés sont récupérés pour le paramétrage du régulateur de force de traction (9) et le régulateur de force de traction (9) est paramétré avec les paramètres de régulateur fins supplémentaires ($R_{f,vx}$) associés.

14. Utilisation d'un régulateur de force de traction (9), paramétré conformément à un procédé selon l'une des revendications 1 à 13 pour la régulation d'une force de traction (F) d'un matériau (3) dans une machine de traitement de bande (1), dans laquelle le matériau (3) est transporté, à une vitesse linéaire (v) en étant sollicité par la force de traction (F), d'un rouleau régulé (2) à un autre rouleau (6) ou d'un autre rouleau (6) à un rouleau régulé (2).

15. Régulateur de force de traction (9) d'un rouleau régulé (2) d'une machine de traitement de bande (1) sur laquelle un matériau (3) est transporté, à une vitesse linéaire (v) en étant sollicité par une force de traction (F), du rouleau régulé (2) à un autre rouleau (6) ou d'un autre rouleau (6) à un rouleau régulé (2), dans lequel le régulateur de force de traction (9) présente une unité de paramétrage (90) permettant le paramétrage du régulateur de force de traction (9) et dans lequel le régulateur de force de traction (9) est configuré pour réguler la force de traction (F) par l'intermédiaire d'une vitesse de rotation ($v_9$) du rouleau régulé (2), **caractérisé en ce que** l'unité de paramétrage (90) est configurée pour augmenter, pendant un test à l'arrêt (T0) à une vitesse linéaire (v) de zéro, la force de traction (F) à une force de traction d'identification ($F_{w2}$), de préférence de 90 % d'un point de travail de force de traction à l'arrêt ($F_{op}$) prédéfini, afin de déterminer des paramètres de parcours à l'arrêt du parcours de force de traction ($G_{F,0}$) et de définir, à partir des paramètres de parcours à l'arrêt du parcours de force de traction ($G_{F,0}$), de préférence au moyen d'un procédé de caractéristiques de fréquence, des paramètres de régulateur à l'arrêt ($R_{F,0}$) du régulateur de force de traction (9), et de paramétrer le régulateur de force de traction (9) avec les paramètres de régulateur à l'arrêt ($R_{F,0}$).

## Fig. 1

$$T0: \quad v=0; \quad F=F_{w2}$$
$$\longrightarrow G_{F,0} \longrightarrow R_{F,0}$$

$$T2: \quad R_{F,1} \quad v=v_2 ; \quad F=F_{op2}$$
$$F=F_{op2}+\Delta F$$
$$v=v_2 + \Delta v$$
$$\longrightarrow h2 \longrightarrow G_{F,v2} \longrightarrow R_{F,v2}$$

$$T1: \quad R_{F,0}; \quad v=v_1; \quad F=F_{op1}$$
$$F=F_{op1}+\Delta F$$
$$\longrightarrow h1 \longrightarrow G_{F,v1} \longrightarrow R_{F,v1}$$

## Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112014005964 T5